# EUROPEAN PATENT SPECIFICATION

(11) **EP 0 698 074 B1**
(45) Date of publication and mention of the grant of the patent: **12.11.1997**
(21) Application number: 94917632.5
(22) Date of filing: 11.05.1994
(51) Int. Cl.: C10G 47/16, B01J 29/04

(54) **PROCESS FOR HYDROCRACKING HYDROCARBONS**
VERFAHREN ZUM HYDROKRACKEN VON KOHLENWASSERSTOFFEN
PROCEDE D'HYDROCRAQUAGE D'HYDROCARBURES

(30) Priority: 14.05.1993 NL 9300835
(43) Date of publication of application: 28.02.1996
(73) Proprietor: Akzo Nobel N.V., 6824 BM Arnhem (NL)
(72) Inventor: NAT, Pieter Jan, NL-1035 PP Amsterdam (NL); VOGT, Eelco Titus Carel, NL-3524 KW Utrecht (NL)
(74) Representative: Schalkwijk, Pieter Cornelis
(86) International application number: EP9401563
(87) International publication number: WO9426847

(56) References cited:
- WO-A-91/11390
- WO-A-93/02159
- US-A- 4 419 271
- US-A- 4 894 142

## Description

The invention relates to a process for the catalytic hydrocracking of hydrocarbon feedstocks. More particularly, the invention relates to a process for hydrocracking feedstocks such as gas oils and residues.

The oil refining industry commonly employs hydrocracking processes to convert hydrocarbonaceous feedstocks to products of a lower boiling range. Such processes entail contacting the feedstock with hydrogen at elevated temperature and pressure under the influence of a catalyst, with the catalyst containing at least a hydrogenation component and an acidic component; the latter effects the actual cracking.
In these types of processes, the function of the hydrogenation component is not restricted to saturating the cracking products. Another important function is to convert the sulphur and/or nitrogen compounds present in the feedstock into hydrogen sulphide and/or ammonia by means of hydrogenation reactions, after which, in a subsequent step, these gases can easily be removed.
Hydrocracking processes are generally carried out at a pressure in the range of about 100 to 250 bar and a temperature in the range of 230° to 450°C. Such processes have been described in, int. al., US Patent Specification No. 4,085,068, where the catalyst employed is a composition which in addition to a Group VIII metal and a Group VIB metal contains a carrier in which silica-alumina (the acidic component) is dispersed in an alumina matrix; US Patent Specification No. 4,419,271, where use is made of a catalyst which in addition to at least a hydrogenation metal likewise contains a carrier in which silica-alumina is dispersed in an alumina matrix, but with a zeolite also incorporated into said carrier; and GB Patent Specification No. 2 114 594, where the catalyst used contains, in addition to at least a hydrogenation metal, a carrier, such as alumina, and a faujasite which has been steam calcined and then dealuminated. In all of these processes the selection of the catalyst is closely bound up with the objective of attaining the highest possible activity in combination with the highest possible middle distillate selectivity.
A more recent development is to carry out hydrocracking processes in reactors commonly employed for hydrodesulphurisation/hydrodenitrogenation. The cost of constructing "regular" hydrocracking reactors is substantial on account of the high pressures which occur during operation, and it has been found that even though reactors designed for hydrodesulphurisation/hydrodenitrogenation do not permit such high pressures, achieving a certain degree of hydrocracking, notably to middle distillate, at these lower pressures, say below 100 bar, is nevertheless becoming increasingly relevant. This development forms the subject of, int. al., European Patent Specification No. 0 244 106, where it is stated that it is a challenge to discover suitable catalysts for this type of hydrocracking, which is also referred to as "mild hydrocracking" (or MHC). This European patent specification's own recommendation to this end is a catalyst containing a carrier, nickel, molybdenum, and phosphorus, with a specific pore size distribution on the part of the catalyst being required. It should further be noted that the type of catalyst known from aforementioned US Patent Specification No. 4,085,068 has founa widespread commercial use.
Another development in the field of hydrocracking processes is described in International Patent Application WO 93/02159. This document discloses hydrocracking catalysts containing as acidic component an inorganic, crystalline, non-layered aluminosilicate having pores with diameters in excess of 1,3 nm and exhibiting, after calcination, an X-ray diffraction pattern with at least one peak at a d-spacing greater than 1,8 nm. This document also teaches that prior to the actual hydrocracking step, the feedstock should be subjected to a hydrodesulphurisation/hydrodenitrogenation.
Surprisingly, it has now been found that hydrocracking catalysts based on the aluminosilicate according to WO 93/02159 can in fact be used for hydrocracking feedstocks which have not been subjected to preparatory hydrodesulphurisation/hydrodenitrogenation - and this under conventional hydrocracking conditions and, in particular, under MHC conditions. Such a widening of the range of applications of these catalysts will evidently bring major economic advantages, now that it has been found that the pretreatment with a hydrogenation catalyst prescribed by WO 93/02159 may be omitted.
It has also been found, and again, surprisingly, that such hydrocracking catalysts, when compared with the known hydrocracking catalysts based on a carrier composed of silica-alumina dispersed in an alumina matrix, exhibit a higher activity, more particularly a higher weight activity, while also giving an advantageous effect with regard to selectivity, viz. a significantly higher ratio between branched and linear molecules, the so-called iso-to-normal (I/N) ratio, in the light fraction of the hydrocracking product. The branched molecules in the light fraction are valuable components for the gasoline "pool", and the branched C4-and C5-molecules in particular constitute very valuable raw materials for, e.g., alkylation reactions and the preparation of methyl-t-butyl ether (MTBE); with respect to all of this it also holds that the middle distillate selectivity is at the same level at least as that of the aforementioned known silica-alumina/alumina catalysts.

The invention provides a process for simultaneously hydrocracking, hydrodesulphurising, and hydrodenitrogenating a hydrocarbonaceous feed by contacting a feedstock which contains sulphur compounds and nitrogen compounds, has a boiling range of more than 80% by volume boiling above 300°C, and has not been subjected to any preparatory catalytic hydrodesulphurisation or hydrodenitrogenation, at elevated temperature and pressure, in the presence of hydrogen, with a catalyst containing a carrier, a Group VIB metal component, a Group VIII metal component, and an inorganic, crystalline, non-layered aluminosilicate with pores having diameters greater than 1,3 nm and exhibiting, after calcination, an X-ray diffraction pattern with at least one peak at a d-spacing greater than 1,8 nm.

In the present specification the references to a Group VIB metal component and a Group VIII metal component refer to a component of a metal of Group VIB of the CAS System Periodic Table of Elements and a component of a metal of Group VIII of the CAS System Periodic Table of Elements, respectively.

### The feedstock for the process according to the invention

Among the feedstocks suitable for treatment according to the process of the invention are atmospheric gas oils, vacuum gas oils, atmospheric residues, vacuum residues, crudes, deasphalted oils, shale oils, demetallised oils, and tar sand oils.
Generally, the boiling range of such feedstocks is such that at least 70% by volume will boil above 350°C. Preferably, at least 70% by volume will boil below 500°C. The boiling range will usually be of from 300° to 650°C, with preference being given to feedstocks having a boiling range of from 320° to 620°C.
The sulphur content of the feed is generally above 0,1 wt.% and will frequently be more than 1 wt.%.
The nitrogen content is generally above 500 ppm and will frequently be in the range of 500 to 4000 ppm.
The feedstocks, in particular in the case of atmospheric and vacuum residues, may further contain undesired quantities of metal contaminants (nickel, vanadium, etc.). In the process according to the invention metal contents up to 100 ppm are considered tolerable, but optimum results are obtained with metal contents up to 10 ppm, preferably up to 2 ppm. A preparatory demetallisation, if such is desired, may be carried out by an otherwise conventional route, with there being a choice between demetallising in a separate reactor and demetallising in the same reactor in which the process according to the invention takes place by providing the reactor with an upstream demetallisation catalyst bed.

### The catalyst for the process according to the invention

The suitable carrier materials include alumina, silica, silica-alumina, silica-magnesia, zirconia, titania, silica-zirconia, silica-magnesia, clays, dispersions of silica-alumina in alumina, and AlPO₄. Preference is given to alumina, more particularly gamma-alumina, silica-alumina (silica-gamma-alumina) with a silica content in the range of 1 to 10 wt.%, silica-alumina (silica-gamma-alumina) with a silica content in the range of 10 to 98 wt.%, and dispersions of particulate silica-alumina in a gamma-alumina matrix. Appropriate silica-aluminas for use in the preparation of the latter carriers are the well-known silica-alumina cogel s and silica-alumina graft copolymers. It holds for each of these two types of silica-aluminas that they generally contain in the range of 60 to 99 wt.%, preferably in the range of 75 to 98 wt.%, of silica (based on dry weight). After being dried or not, the cogel or the graft copolymer is intermixed with an alumina hydrogel (boehmite). The silica content of the resulting dispersion generally is in the range of 10 to 90 wt.%, preferably in the range of 20 to 80 wt.%, based on dry weight.

Suitable hydrogenation metal components include nickel, cobalt, molybdenum, and tungsten. Preferred combinations are cobalt/molybdenum, nickel/molybdenum, nickel/cobalt/molybdenum, and nickel/tungsten. Noble metals of Group VIII, such as platinum, palladium, and mixtures thereof, may also be used.

For a full description of the crystalline aluminosilicate, reference is made to International Patent Applications WO 91/11390 and 93/02159. These types of materials distinguish themselves from the known zeolites, such as Zeolite-Y and ZSM-5, by having larger pores; in particular, they have pores of an essentially uniform diameter in the range of 1,3 to 20 nm, preferably in the range of 1,8 to 10 nm, more preferably still in the range of 1,8 to 4 nm. The benzene adsorption capacity, determined at 6,7 kPa and 25°C, is greater than 15 g of benzene per 100 g of calcined material.
The characteristic X-ray diffraction pattern of these aluminosilicates shows at least one peak at a position greater than 1,8 nm d-spacing (Cu-K alpha radiation). More particularly, the pattern will show at least two peaks at positions greater than 1 nm d-spacing, at least one of which is to be found at a position greater than 1,8 nm d-spacing. The aluminosilicates' preparation may be as follows: the requisite amounts of a silica source, an alumina source, and a matrix compound are combined in water, and the resulting mixture is crystallised at a temperature in the range of 25° to 175°C, with care being taken to maintain the pH of the mixture at a value in the range of 9 to 14. As the occasion arises, an alkali metal source, a second matrix compound, or an additional organic adjuvant may be added to the crystallisation mixture.
The suitable silica sources include precipitated amorphous silica, amorphous silica prepared by flame hydrolysis, water glass, organic silicates, and crystalline inorganic silicates, such as zeolites or clays.
The suitable alumina sources include aluminium oxide, aluminium oxyhydroxide, aluminium hydroxide, sodium aluminate, aluminium sulphate, aluminium nitrate, and organic aluminium compounds such as aluminium alkoxides. The suitable matrix compounds include salts - preferably halides, hydroxides, silicates, or combinations thereof - containing ammonium ions or phosphonium ions - R₁R₂R₃R₄Q⁺ - wherein Q represents phosphorus or nitrogen, R₁ represents an alkyl group having 6-36 carbon atoms, and R₂, R₃, and R₄ have the meaning of hydrogen or an alkyl group of 1-5 carbon atoms. The suitable alkali metal sources include the oxides or hydroxides of the elements of Groups IA and IIA, or compounds of these elements with silica or alumina, such as water glass or sodium aluminate. The compounds suitable for use as second matrix compounds include those which satisfy the formula for matrix compounds immediately above, except that this time R₁ also has the meaning of hydrogen or an alkyl group of 1-5 carbon atoms. The suitable organic adjuvants include aromatic hydrocarbons or amines having 5-20 carbon atoms, halogen- or C₁-C₁₄ alkyl-substituted derivatives thereof, cyclic and polycyclic hydrocarbons having 5-20 carbon atoms and halogen- or C₁-C₁₄ alkyl-substituted derivatives thereof, and, finally, branched and linear aliphatic hydrocarbons having 5-20 carbon atoms and halogen- or C₁-C₁₄ alkyl-substituted derivatives thereof.
After the crystallisation process the crystalline material is isolated, washed with water, dried, and, optionally, calcined at a temperature in the range of 400° to 750°C in an atmosphere of air and/or nitrogen.
If so desired, the crystalline material is subjected to an ammonium exchange in order to reduce its sodium content; in that case, the ammonium ions are converted to hydrogen ions in a subsequent calcining process ( e.g., the final calcination - see below).
The silica:alumina molar ratio of the crystalline aluminosilicate generally has a value from 2 to infinite, preferably in the range of 2 to 100.
Especially suitable is the aluminosilicate designated with the acronym MCM-41, the preparation of which is described in Example 22 of aforementioned International Patent Application WO 93/02159.

Other molecular sieves may be incorporated into the catalyst in addition to said aluminosilicate, including Y-zeolites, ultrastable Y-zeolites having a unit cell constant of from 2,425 to 2,440 nm, zeolite beta, mordenite, and materials of the ZSM-5 type having a silica:alumina ratio in the range of 12 to 300.

The amounts of the various catalyst components are as follows: 10 to 90 wt.%, preferably 20 to 80 wt.%, of crystalline aluminosilicate, 5 to 30 wt.%, preferably 5 to 25 wt.%, of Group VIB metal component, calculated as trioxide, 1 to 15 wt.%, preferably 2 to 10 wt.%, of Group VIII metal component, calculated as oxide, and 10 to 90 wt.%, preferably 20 to 80 wt.%, of carrier.

The preparation of the catalyst may be by an otherwise known route, e.g., by first mixing the carrier material or, more precisely, a precursor thereof, with the aluminosilicate, extruding the obtained mass optionally followed by an intermediate calcination, impregnating the extrudates with an aqueous solution of precursors of the metal components, and subjecting the impregnated extrudates to a final calcination at a temperature in the range of 400° to 700°C for 0,1 to 10 hours, in order to convert the metal component precursors to the oxide form and, where applicable, convert gamma-alumina precursors to gamma-alumina. Additionally, of course, the metal component precursors, or a portion thereof, may be admixed as the mixing of the (precursor) carrier material and the aluminosilicate is carried out. If a dispersion of silica-alumina in alumina is used as carrier material, the dispersion may be intermixed with the aluminosilicate as a gel, or else be dried and/or calcined first. In a more preferred embodiment, the gel dispersion is first spray-dried and the spray-dried material ground to a powder, after which said powder is intermixed with the aluminosilicate. Next, the extrusion, impregnation, calcination, etc. processes may be carried out as described hereinbefore.
In order to avoid the risk of the pore system of the aluminosilicate collapsing during the extrusion process, it is recommended that the aluminosilicate be present in the uncalcined form during extrusion.

The catalyst particles may have many different shapes. The suitable shapes include cylinders, spheres, rings, and symmetric and asymmetric polylobes, for instance tri- or quadrulobes. The diameter usually amounts to 1 to 10 mm, and the length also amounts to 1 to 10 mm.

It is advisable to convert the catalyst, i.e., the metal components, in the sulphidic form prior to use in the process according to the invention. This may be done in an otherwise conventional manner, e.g., by contacting the catalyst in the reactor at increasing temperature with hydrogen and a sulphur-containing feedstock, or with a mixture of hydrogen and hydrogen sulphide.

### The process according to the invention

When carrying out the process under "regular" hydrocracking conditions, the following values for the relevant process parameters apply:
temperature: in the range of 230° to 450°C;
hydrogen pressure: in the range of 100 to 250 bar;
space velocity: in the range of 0,5 to 3 hours⁻¹;
H₂/oil ratio: in the range of 1000 to 2000 Nl/l.
Generally, the conditions selected are such as will give a conversion of at least 80 wt.%; the term conversion in this context refers to the weight, in per cent, of obtained product with a boiling point below 391°C (where applicable, this weight is corrected by taking into account the weight of the portion of the feedstock which already boils below 391°C) vis-à-vis the weight of the feedstock deployed. Preferably, the conversion exceeds 90 wt.%.
This embodiment of the process according to the invention makes it possible to obtain good middle distillate selectivities (boiling range of from 165° to 391°C). The middle distillate yield generally is the range of 25 to 50 wt.%, more particularly in the range of 25 to 30 wt.%.

As was stated earlier, it has been found that the process according to the invention produces light fractions in which the iso-to-normal ratio has favourable values. Of course, the quantity of this lower-boiling fraction is dependent on the process conditions: opting for a high middle distillate selectivity will result in a lower yield of lighter fractions, and vice versa.
In general, the hydrodesulphurisation and hydrodenitrogenation processes are carried out in such a way that at least 80 wt.% of the sulphur compounds originally present in the feedstock and at least 40 wt.% of the nitrogen compounds are converted into compounds having a lower sulphur content and nitrogen content, respectively, and H₂S and NH₃, respectively.

When the process is carried out under mild hydrocracking conditions, the following values hold for the relevant process parameters:
temperature: in the range of 350° to 415°C;
hydrogen pressure: in the range of 25 to 100 bar, preferably in the range of 40 to 80 bar;
space velocity: in the range of 0,3 to 2 hours⁻¹;
H₂/oil ratio: in the range of 200 to 600 Nl/l.
Generally, the conditions selected are such as will give a conversion of at least 20 wt.%. The definition of conversion is the same as that given above. Preferably, the conversion is more than 50 wt.%. This embodiment generally also gives good middle distillate selectivities. The middle distillate yield usually is more than 15 wt.%, more particularly more than 25 wt.%.
The aforementioned selectivity advantage with regard to branched vs. linear molecules in the lighter-boiling product fraction also applies in respect of this embodiment.
In general, the hydrodesulphurisation and hydrodenitrogenation processes are carried out in such a way that at least 80 wt.% of the sulphur compounds originally present in the feedstock and at least 40 wt.% of the nitrogen compounds are converted into compounds having a higher sulphur content and nitrogen content, in particular H₂S and NH₃.

The invention will be elucidated with reference to the following examples.

### Example 1

### Preparation of Comparative Catalyst A according to US 4,085,068

1050 g of alumina hydrogel (boehmite, LOI 30,5%) were mixed with 200 g of powdered molybdenum trioxide. To this mixture were added 936 g of amorphous silica-alumina cogel (LOI 15%). The product obtained after mixing was extruded to produce cylindrical extrudates of 1,5 mm in diameter. The extrudates were dried at 120°C for 20 hours, and then calcined in air at 600°C for 1 hour. Next, the extrudates were impregnated with a solution of cobalt nitrate in water, followed by renewed drying and calcining under the conditions mentioned just above.
The catalyst contained 3,1 wt.% of cobalt oxide, 11,5 wt.% of molybdenum trioxide, 34,2 wt.% of silica, and the balance alumina.

### Example 2

### Preparation of the crystalline aluminosilicate

To 35,9 kg of a solution in water containing 28,3 wt.% of cetyltrimethylammonium chloride were added 1,30 kg of aluminium isopropoxide and 24,36 kg of demineralised water. The mixture was stirred overnight, after which the following were successively added: 5,14 kg of an aqueous solution containing 25 wt.% of tetramethylammonium hydroxide, 2,83 kg of tetraethyl orthosilicate, and 4,76 kg of precipitated silica (LOI 6%; VP-810®, ex Akzo-PQ Silica). Tne thus prepared crystallisation mixture was kept at a temperature of 90°C for 48 hours, after which the crystalline product was filtered off, washed with water, and dried at room temperature. A small portion was calcined at 600°C to determine its characteristics, which were as follows: the specific surface area was 819 m²/g, the pore volume was 0,797 ml/g, and the average pore diameter was 36Å (all pore data was determined with reference to the N₂-desorption curve). The molar silica:alumina ratio was 24,9.

### Preparation of Catalyst B according to the invention

The preparation of this catalyst was analogous to that described for Comparative Catalyst A, except that, instead of the amorphous silica-alumina cogel, the crystalline aluminosilicate was employed. 739 g of alumina hydrogel (boehmite, LOI 24%) were mixed with 168 g of powdered molybdenum trioxide. To this mixture were added 1127 g of the uncalcined crystalline aluminosilicate (predried at 120°C: LOI 40%; Malvern particle size: 10-15 micrometers). The product obtained after mixing was extruded to produce cylindrical extrudates of 1,5 mm in diameter. The extrudates were dried at 120°C for 20 hours, and then calcined in air at 650°C for 1 hour; so as to avoid the formation of combustible gas mixtures, the heating phase to 500°C was carried out in a nitrogen atmosphere. Next, the extrudates were impregnated with an aqueous solution of cobalt nitrate, followed by renewed drying (20 hours, 120°C) and calcining in air (1 hour, 650°C).
The catalyst contained 3,3 wt.% of cobalt oxide, 11,4 wt.% of molybdenum trioxide, 46 wt.% of silica, and the balance alumina.

### Example 3

The action of the catalysts of the preceding examples was tested under mild hydrocracking conditions.
The reactor was made up of a tube having an internal diameter of 2 cm and a length of 110 cm. The tube was filled with 100 ml of catalyst homogeneously intermixed with carborundum particles. After the catalyst had been sulphided using a mixture of hydrogen and an SRGO in which dimethyl sulphide had been dissolved to an S content of 2,5 wt.%, a preheated Kuwait vacuum gas oil was passed over the catalyst. For the boiling point and other data of this oil reference is made to Table 1 below. Table 2 lists the process conditions, Table 3 gives the test results.
The determination of the relative weight activities (RWA) was carried out as follows.
HDS and HDN: For each catalyst two reaction rate constants (k_{HDS} and k_{HDN}) were calculated on the basis of the obtained sulphur and nitrogen numbers of the product vis-à-vis the sulphur and nitrogen numbers of the feedstock. Next, the reaction rate constants for comparative catalyst A were valued at 100, after which a recalculation of the reaction rate constants of the catalyst of Example 2 gave the requested RWA values. MHC: For both catalysts the conversion to products having a boiling point below 391°C was determined, taking into account, of course, the portion of the feedstock already boiling in this range. From these conversions two rate constants were calculated, one for the catalyst of Example 2, the other for Comparative Catalyst A. The latter was valued at 100, after which a recalculation of the former gave the requested RWA value.

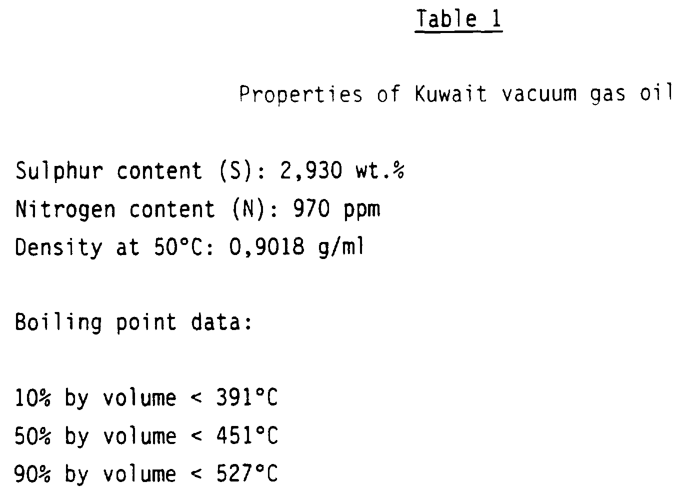

**Table 2**

| Test conditions | | |
|---|---|---|
| | Condition 1 | Condition 2 |
| Pressure (bar) | 50 | 50 |
| H₂/oil (Nl/l) | 320 | 320 |
| Temperature (°C) | 385 | 385 |
| LHSV (hour⁻¹) | 2,00 | 0,50 |

**Table 3**

| Test results | | | |
|---|---|---|---|
| Condition | RWA | | |
| | HDS | HDN | MHC |
| 1 | 119 | 126 | 139 |
| 2 | 107 | 126 | 141 |

Thus, it appears that the catalyst according to the invention of Example 2 has an improved weight activity over Comparative Catalyst A. The middle distillate selectivity of the two catalysts was determined separately and found to be substantially the same.
Further, the iso-to-normal (I/N) ratio of the C₄ compounds in the gas fraction was determined by GC analysis of multiple samples of the gas fraction at approximately the same conversion. The I/N ratio for the gases is assumed to be indicative of the I/N ratio of the higher-boiling products.

**Table 4**

| I/N ratio | | |
|---|---|---|
| Condition | Comparative catalyst A | Catalyst B |
| 1 | 0,241 | 0,268 |
| 2 | 0,283 | 0,306 |

As appears from Table 4, the I/N ratio of the product obtained with Catalyst B according to the invention is higher than the I/N ratio of the product obtained with Comparative Catalyst A.

### Example 4

### Preparation of Catalyst C

In this example a catalyst is prepared comprising the specified zeolite on a carrier comprising silica/alumina dispersed in alumina. The preparation of this catalyst was analogous to that described for Comparative Catalyst A, except that half of the silica-alumina cogel was replaced by the crystalline aluminosilicate prepared in Example 2. The final catalyst contained 13,3 wt.% molybdenum calculated as trioxide and 3,4 wt.% cobalt calculated as oxide.

### Example 5

Catalyst C of Example 4 was tested under mild hydrocracking conditions in the manner described in Example 3, and compared with Comparative Catalyst A prepared in Example 1.
The relative weight activities were determined as described in Example 3, with the reaction rate constants of the test with Comparative Catalyst A being rated as 100. The results are given in Table 5 below.

**Table 5**

| Test results | | | |
|---|---|---|---|
| Condition | RWA | | |
| | HDS | HDN | MHC |
| 1 | 125 | 125 | n.d. |
| 2 | 109 | 119 | 125 |
| n.d. stands for not determined | | | |

Thus, it appears that Catalyst C according to the invention has an improved weight activity over Comparative Catalyst A. The middle distillate selectivity of the two catalysts was determined separately and found to be substantially the same.
The iso-to-normal (I/N) ratio of the C₄ compounds in the gas fraction was also determined. The results thereof are given in Table 6. multiple samples of the gas

**Table 6**

| I/N ratio | | |
|---|---|---|
| Condition | Comparative Catalyst A | Catalyst C |
| 1 | 0,230 | 0,237 |
| 2 | 0,260 | 0,270 |

As appears from Table 6, the I/N ratio of the product obtained with the catalyst according to the invention is higher than the I/N ratio of the product obtained with Comparative Catalyst A.

## Claims

1. A process for simultaneously hydrocracking, hydrodesulphurising, and hydrodenitrogenating a hydrocarbonaceous feed by contacting a feedstock which contains sulphur compounds and nitrogen compounds, has a boiling range of more than 80% by volume boiling above 300°C, and has not been subjected to any preparatory catalytic hydrodesulphurisation or hydrodenitrogenation, at elevated temperature and a pressure of more than 100 bar, in the presence of hydrogen, with a catalyst containing a carrier, a component of a metal of Group VIB of the CAS System Periodic Table of Elements, a component of a metal of Group VIII of the CAS System Periodic Table of Elements, and an inorganic, crystalline, non-layered aluminosilicate with pores having diameters greater than 1,3 nm and exhibiting, after calcination, an X-ray diffraction pattern with at least one peak at a d-spacing greater than 1,8 nm.

2. A process for simultaneously mild hydrocracking, hydrodesulphurising, and hydrodenitrogenating a hydrocarbonaceous feed by contacting a feedstock which contains sulphur compounds and nitrogen compounds, has a boiling range of more than 80% by volume boiling above 300°C, and has not been subjected to any preparatory catalytic hydrodesulphurisation or hydrodenitrogenation, at elevated temperature and a pressure in the range of 25 to 100 bar, in the presence of hydrogen, with a catalyst containing a carrier, a component of a metal of Group VIB of the CAS System Periodic Table of Elements, a component of a metal of Group VIII of the CAS System Periodic Table of Elements, and an inorganic, crystalline, non-layered aluminosilicate with pores having diameters greater than 1,3 nm and exhibiting, after calcination, an X-ray diffraction pattem with at least one peak at a d-spacing greater than 1,8 nm.

## Patentansprüche

1. Verfahren zum gleichzeitigen Hydrierkracken, Hydrierdesulfurieren und Hydrierdenitrogenieren einer Kohlenwasserstoffspeisung durch Kontaktieren einer Speisung, die Schwefelverbindungen und Stickstoffverbindungen enthält, zu mehr als 80 Vol.% einen Siedebereich von über 300°C aufweist und keiner vorbereitenden katalytischen Hydrierdesulfurierung oder Hydrierdenitrogenierung unterworfen worden ist, bei erhöhter Temperatur und einem Druck von mehr als 100 bar in Gegenwart von Wasserstoff mit einem Katalysator, der einen Träger, eine Komponente eines Metalls der Gruppe VIB des CAS-Periodensystems der Elemente, eine Komponente eines Metalls der Gruppe VIII des CAS-Periodensystems der Elemente und ein anorganisches, kristallines, nichtgeschichtetes Aluminiumsilikat enthält, dessen Poren Durchmesser von grösser als 1,3 nm haben und das nach dem Glühen ein Röntgenbeugungsdiagramm mit mindestens einem Peak bei einem d-Abstand von grösser als 1,8 nm zeigt.

2. Verfahren zum gleichzeitigen milden Hydrierkracken, Hydrierdesulfurieren und Hydrierdenitrogenieren einer Kohlenwasserstoffspeisung durch Kontaktieren einer Speisung, die Schwefelverbindungen und Stickstoffverbindungen enthält, einen Siedebereich von mehr als 80 vol.% über 300°C aufweist und keiner vorbereitenden katalytischen Hydrierdesulfurierung oder Hydrierdenitrogenierung unterzogen worden ist, bei erhöhter Temperatur und einem Druck im Bereich von 25 bis 100 bar in Gegenwart von Wasserstoff mit einem Katalysator, der einen Träger, eine Komponente eines Metalls der Gruppe VIB des CAS-Periodensystems der Elemente, eine Komponente eines Metalls der Gruppe VIII des CAS-Periodensystems der Elemente und ein anorganisches, kristallines, nicht-geschichtetes Aluminiumsilikat enthält, dessen Poren Durchmesser von über 1,3 nm haben und das nach dem Glühen ein Röntgenbeugungsdiagramm mit mindestens einem Peak bei einem d-Abstand von grösser als 1,8 nm zeigt.

## Revendications

1. Un procédé permettant simultanément l'hydrocraquage, l'hydrodésulfuration et l'élimination hydrogénante de l'azote dans une charge hydrocarbonée par mise en contact d'une charge qui contient des dérivés du soufre et des dérivés de l'azote, qui présente un point d'ébullition pour plus de 80% en volume au-dessus de 300°C et qui n'a pas été soumise à une hydrodésulfuration ou à une élimination hydrogénante de l'azote catalytique préalable, à température élevée et à une pression supérieure à 100 bars, en présence d'hydrogène, avec un catalyseur contenant un support, un composant d'un métal du groupe VIB de la Classification périodique des éléments du système CAS, un composant d'un métal du groupe VIII de la Classification périodique des éléments du système CAS, et un aluminosilicate inorganique cristallin non stratifié, dont les pores présentent des diamètres supérieurs à 1,3nm et présentant, après calcination, un spectre de diffraction aux rayons X comportant au moins un pic à un espacement d supérieur à 1,8nm.

2. Un procédé permettant simultanément l'hydrocraquage modéré, l'hydrodésulfuration et l'élimination hydrogénante de l'azote dans une charge hydrocarbonée par mise en contact d'une charge qui contient des dérivés du soufre et des dérivés de l'azote, qui présente un point d'ébullition pour plus de 80% en volume au-dessus de 300°C et qui n'a pas été soumise à une hydrodésulfuration ou à une élimination hydrogénante de l'azote catalytique préalable, à température élevée et à une pression dans l'intervalle de 25 à 100 bars, en présence d'hydrogène, avec un catalyseur contenant un support, un composant d'un métal du groupe VIB de la Classification périodique des éléments du système CAS, un composant d'un métal du groupe VIII de la Classification périodique des éléments du système CAS, et un aluminosilicate inorganique cristallin non stratifié, dont les pores présentent des diamètres supérieurs à 1.3nm et présentant, après calcination, un spectre de diffraction aux rayons X comportant au moins un pic à un espacement d supérieur à 1,8nm.
